# EUROPÄISCHE PATENTANMELDUNG

(11) **EP 2 045 656 A1**
(43) Veröffentlichungstag der Anmeldung: **08.04.2009**
(21) Anmeldenummer: 07019291.9
(22) Anmeldetag: 01.10.2007
(51) Int. Cl.: G02F 1/15, H01H 9/18

(54) **Schalter mit einer flächigen Anzeige**

(71) Anmelder: SIEMENS AKTIENGESELLSCHAFT, 80333 München (DE)
(72) Erfinder: Karlson, Björn, 90480 Nürnberg (DE); Pietschmann, Lutz, 02779 Grossschönau (DE)

(57) **Zusammenfassung**

Die Erfindung betrifft einen Schalter (11,21), insbesondere ein Schaltgerät oder Befehlsgerät, mit einer flächigen Anzeige (13,16,17,18), wobei die flächige Anzeige (12,16,17,18) zur visuellen Anzeige wenigstens einer Information vorgesehen ist, die einen Bezug zu einem gegenwärtigen oder einem zukünftigen Zustand des Schalters (11,21) oder einer dem Schalter (11,21) zugeordneten Anlage oder Maschine aufweist. Eine räumlich effektivere Anordnung der Schalterbauteile sowie ein reduzierter Energieverbrauch soll durch eine flächige Anzeige (13,16,17,18) des Schalters (11,21) bewerkstelligt werden, die zumindest teilweise ein elektrochromes Material und Elektroden aufweist. Die Elektroden sind dazu vorgesehen, bestimmte Bereiche des elektrochromen Materials mit einer elektrischen Spannung zu belegen, damit einen Farbumschlag zu provozieren und mittels einer intelligenten Ansteuerung eine oder mehrere Informationen an den Benutzer weiterzugeben.

## Beschreibung

Die Erfindung betrifft einen Schalter mit einer flächigen Anzeige, wobei die flächige Anzeige zur visuellen Anzeige wenigstens einer Information vorgesehen ist, die einen Bezug zu einem gegenwärtigen und/oder einem zukünftigen Zustand aufweist.

Derartige Schalter werden in industriellen Anlagen, Automatisierungssystemen, aber auch im Konsumerbereich eingesetzt. Sie fungieren nicht nur als reine Befehlsgeräte, welche zur Zustandsänderung einer Maschine, Computer oder ähnlichem eingesetzt werden, sondern dienen ebenso zur Interaktion zwischen Mensch und Maschine. Sie können deshalb auch zu Ein/Ausgabegeräten im Sinne eines Human Maschine Interface (HMI) gezählt werden. Die Rückmeldung zum Bediener wird über eine optische Anzeige realisiert, die einen Informationsgehalt aufweist, der in direktem Bezug zur Maschine bzw. deren Betriebszuständen oder Schaltzuständen steht. Beispielhaft erwähnt seien an dieser Stelle Dreh-, Hebel-, Kipp-, Schiebe- oder Druckschalter/-taster.

Die optische Anzeige kann hierbei auf unterschiedlichen Methoden zur Visualisierung von Informationen beruhen. Im Wesentlichen unterscheidet man elektrische und mechanische Anzeigen. Die elektrischen Anzeigen werden hauptsächlich mittels lichtemittierenden Dioden (LEDs) oder Glühlampen bestückt. Als problematisch stellt sich die räumliche Ausdehnung der elektrischen Leuchtelemente heraus, die gerade in einem Schalter wertvollen Raum einnehmen, der der Schaltmechanik des Schalters nicht zur Verfügung steht. Eine weitere Möglichkeit stellen die mechanischen Anzeigen dar, die mindestens ein bewegliches Element aufweisen können, welches in einem Fenster auftaucht bzw. verschwindet. Befehlsgeräte oder Schalter, wie beispielsweise ein Not-Aus mit Signalanzeige, sind allein aufgrund der zusätzlichen Mechanik störungsanfälliger bzw. weisen eine geringere Lebensdauer auf.

Mechanische und elektrische Anzeigen weisen z.B. Symbole und/oder Schriftzeichen auf, die am jeweiligen Anzeigeelement angebracht sind oder von diesem gebildet werden.

Aus DE 43 05 349 A1 ist ein elektrischer Schalter mit Leuchtanzeige bekannt, die auf einer Leuchtdiode als Funktionsbeleuchtung basiert.

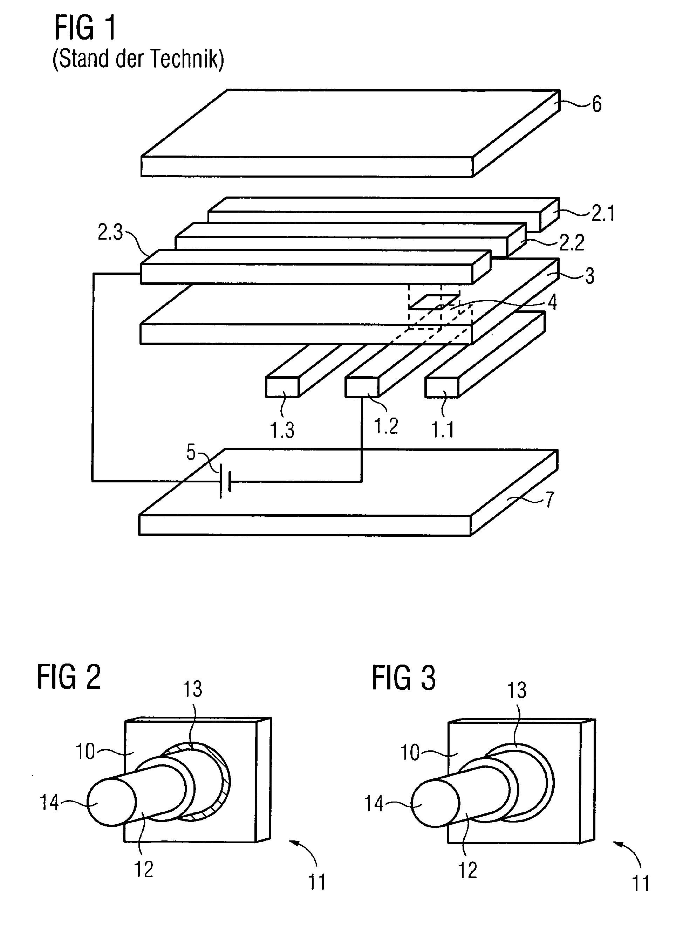

Der Erfindung liegt weiter die Erkenntnis zugrunde, dass in den letzten Jahren sogenannte elektrochrome Displays im Zusammenhang mit anderen technischen Fragestellungen entwickelt wurden. Anhand der Explosionsgrafik in FIG 1 kann die Funktionsweise eines elektrochromen Displays veranschaulicht werden. Hauptbestandteil des elektrochromen Displays ist das elektrochrome Material 3, welches zwischen unteren Elektroden 1.1, 1.2,1.3 und oberen Elektroden 2.1,2.2,2.3 angeordnet ist. Durch das Anlegen einer Spannung über eine obere und eine untere Elektrode kann ein Bereich des elektrochromen Materials 3 unter Spannung gesetzt werden. Das Anlegen eines elektrischen Potentials hat zur Folge, dass die optischen Eigenschaften, wie z.B. das Absorptions- bzw. Reflektionsverhalten geändert wird. Hierbei stellt das elektrochrome Material 3 selbst eine elektrochrom reaktive Schicht dar. Das Anlegen eines elektrischen Potentials erscheint dem menschlichen Auge als Kontrast- oder Farbumschlag.

Die oberen Elektroden 2.1,2.2,2.3 können hierbei als transparente Elektroden ausgeführt sein, die durch eine Schutzschicht 6 von Umwelteinflüssen geschützt werden.

Das elektrochrome Display aus FIG 1 weist eine Matrixansteuerung auf, die eine pixelweise Ansteuerung der elektrochrom reaktiven Schicht erlaubt. Die untere Elektrode 1.2 und die obere Elektrode 2.3 werden von der Spannungsquelle 5 auf unterschiedliche Potentiale gesetzt, so dass der Bereich 4 (Pixel) seine Reflektions- oder Absorptionseigenschaften ändert und einen Teil der zu übermittelnden Informationen an den Benutzer liefert. Solche Matrixansteuerungen sind bekannt aus z.B. LCD- oder OLED-Displays.

Obwohl das elektrochrome Display auf einer Trägerschicht 7 aufgebracht ist, misst es in der Dicke typischerweise 250 Mikrometer.

Aus WO 2004/081644 A1 ist ein elektrochromes Bauteil, nämlich ein so genanntes "smart window" bekannt, in dem das Farbverhalten eines EC-Materials durch das Anlegen einer Spannung an die Elektroden gesteuert wird.

Aufgabe der Erfindung ist es, einen Schalter mit großen optischen Gestaltungsmöglichkeiten anzugeben.

Die Aufgabe wird durch einen Schalter der eingangs genannten Art gelöst, dessen flächige Anzeige zumindest teilweise ein elektrochromes Material und Elektroden aufweist, wobei die Elektroden zum Anlegen einer elektrischen Spannung an zumindest einen Bereich des elektrochromen Materials vorgesehen sind. Die Aufgabe wird ebenfalls von einem Schaltgerät, insbesondere Befehlsgerät, und von einem Überlastrelais gelöst, die mindestens einen derartigen Schalter aufweisen.

Erfindungsgemäß weist der Schalter eine flächige Anzeige auf, die zur visuellen Anzeige einer Information vorgesehen ist. Die Information kann hierbei ein derzeitiger oder zukünftiger Zustand einer Maschine, einer technischen Anlage oder ähnlichem sein. Die übermittelte Information stellt hierbei eine gewisse Rückmeldung an den Benutzer dar, der in Bezug auf die Bedienung eine Anleitung oder Empfehlung erhält. Diese Empfehlung oder Anleitung steht in direktem Bezug zu den auslösenden oder steuernden Funktionen des Schalters bzw. Befehlsgerätes. So könnte beispielsweise eine optische Anzeige dem Benutzer die Information vermitteln, dass eine Betätigung derzeit zu einem gewünschten Ergebnis führt oder möglicherweise ein gewisses Risiko darstellt. Genauso kann die Information als Hinweis darauf verstanden werden, wie das Befehlsgerät oder der Schalter zu bedienen ist bzw. welcher Zustand durch die Betätigung erzielt werden kann. Im Grunde entspricht diese Kommunikation zwischen Maschine und Benutzer einer sogenannten HMI-Anwendung.

Zur Kommunikation mit dem Benutzer weist der Schalter eine flächige Anzeige auf, die zumindest teilweise ein elektrochromes Material aufweist. Dieses elektrochrome Material ist oder enthält eine elektrochrome reaktive Schicht, die durch das Anlegen eines elektrischen Potentials mittels Elektroden seine optischen Eigenschaften ändert. Entweder wird das einfallende Licht bei unterschiedlichen Potentialen unterschiedlich reflektiert oder absorbiert. Dem menschlichen Auge erscheint dies als Farbumschlag.

Da die Elektroden zum Anlegen einer elektrischen Spannung an zumindest einem Bereich des elektrochromen Materials vorgesehen sind, erscheint dieser Farbumschlag auch genau in dem unter Spannung gesetzten Bereich. Um den Informationsgehalt zu erhöhen, können mehrere dieser Bereiche vorgesehen sein, die allerdings durch eine entsprechende Elektrodenanordnung unterstützt werden müssen. So ist beispielsweise eine Matrixanordnung denkbar, bei der untere und obere Elektroden am elektrochromen Material angeordnet sind und aufgrund ihrer Orientierung zusammen eine Gitterstruktur bilden. Die individuell ansteuerbaren Bereiche werden in ihren Ausmaßen durch die Breite der Elektroden definiert und können ggf. auf die gewünschte Pixelbreite reduziert werden.

Vorteilhafterweise kann die flächige Anzeige dünn ausgeführt werden, wodurch zusätzlicher Raum für mechanische Teile entsteht, der dem Schaltmechanismus zugeordnet werden kann. Dadurch ist es auch möglich, die flächige Anzeige an Stellen anzubringen, die aus anderen Gründen den Einbau von voluminöseren Anzeigemitteln nicht erlauben. Vorteilhaft ist auch, dass die flächige Anzeige sich maßgeblich an den funktionalen Formen des Schalters bzw. Befehlsgerätes orientieren kann und keine Anzeigefläche explizit für die Anzeige vorgesehen werden muss. Hierdurch ist beispielsweise eine Funktionskombination der zur Anzeige verwendeten Fläche möglich, indem diese zur Informationsübertragung und beispielsweise zur Betätigung verwendbar ist.

Bei einer vorteilhaften Ausführungsform weist der Schalter eine Schutzschicht, insbesondere eine Schutzfolie, zum Schutz der Elektroden auf. Ein unerwünschter Potentialabfall in einer der oberen oder unteren Elektroden kann zu einer Fehlanzeige führen und wird mit einer Schutzschicht bzw. Schutzfolie wirkungsvoll verhindert. In diesem Zusammenhang erweist sich eine transparente Schutzschicht als vorteilhaft, zumal der Farbumschlag bzw. dessen Kontrast optisch nicht beeinträchtigt wird.

Vorteilhafterweise ist mindestens eine Elektrode als eine transparente Elektrode ausgeführt. Hierdurch wird ebenfalls der Blick auf das elektrochrome Material weiter verbessert, insbesondere wenn eine beidseitige Anbringung der Elektroden am elektrochromen Material gewünscht ist.

Vorteilhafterweise ermöglichen transparente Elektroden eine Kombination der flächigen Anzeige mit herkömmlichen Leuchtelementen, wie z.b LEDs, Glühbirnen, oder ähnlichem. Bei geeigneten Materialien geht nur ein kleiner Teil des Lichtes bei der Hinterleuchtung verloren. Somit steht eine weitere Kommunikationsmöglichkeit mit dem Benutzer offen, bei der die Anzeigeelemente nicht nur anzeigbar sondern auch beleuchtbar sind. Diese Ausführungsform ist damit auch in dunkler oder abgedunkelter Umgebung einsatzfähig.

Bei einer vorteilhaften Ausführungsform bildet die flächige Anzeige ganz oder teilweise eine Betätigungsfläche des Schalters oder ist in ein anderes Bauteil des Schalters, welches eine eigene Funktion aufweist, integriert. So ist beispielsweise denkbar, dass die flächige Anzeige, ganz oder teilweise, in ein Bauteil integriert ist, welches zur Befestigung, zur Identifizierung oder Blockierung des Schalters vorgesehen ist. Hierdurch wird das Bauvolumen des Schalters verringert und die Bauteileanzahl reduziert.

Bei einer vorteilhaften Ausführungsform weist beispielsweise der Hebel oder die Handhabe eine flächige Anzeige auf. Somit ist es möglich, dem betätigenden Element einen größeren Raum zuzugestehen und es somit einer einfacheren Bedienung zugänglich zu machen, da eine separate Anzeigefläche nicht notwendig ist.

Bei einer vorteilhaften Ausführungsform beinhaltet die Information mindestens ein Symbol, eine Zahl, einen Buchstaben, ein Sonderzeichen, ein Flussdiagramm oder eine Kombination derselben. Hierbei ist beispielsweise auch an Piktogramme oder ähnliche Symbole zu denken, dies wird insbesondere durch eine besondere Elektrodenanordnung bzw. Elektrodenform erreicht.

Vorteilhafterweise weisen die Informationen eine Zeitabhängigkeit auf. Somit sind auch Laufschriften, blinkende Bestandteile oder bildschirmartige Darstellungen möglich, ohne den gleichen Aufwand wie beispielsweise bei einem Liquid Crystal Display (LCD) oder einem Bildschirm zu betreiben.

Vorteilhafterweise beinhaltet die Information eine physikalische Größe, insbesondere Strom, Spannung, Temperatur, und/oder ein Signal, insbesondere ein Auslösesignal. Beispielsweise könnte eine Maschine beim Erreichen eines Temperaturschwellenwertes in einen anderen Zustand überwechseln, der auf der flächigen Anzeige darstellbar bzw, im Voraus ankündbar ist. Alternativ oder zusätzlich könnte der Zustand auch durch ein Signal, insbesondere durch ein Auslösesignal, einer Anlage beeinflussbar oder abänderbar sein, wenn die Anlage beispielsweise einen Ausfall oder das anstehende Nachfüllen eines Rohstoffes durch das Signal anzeigt.

Vorteilhafterweise ist das elektrochrome Material zur Generierung einer oder mehrerer Farben geeignet. Dessen elektrochrom reaktive Schicht kann hierbei aus einer Mischung verschiedener Chemikalien bestehen. Der Farbumschlag findet beispielsweise dadurch statt, dass sich bei einer Stromrichtung eine Substanz einfärbt, und bei der umgekehrten Stromrichtung eine andere. Eine Einfärbung nach dieser Methode schließt auch ein mögliches Farbloswerden mit ein, wobei die Entfärbung der reaktiven Komponente die Sicht auf ein anderes Material, z.B. ein opakes, inertes Zwischenmaterial, freigibt. Zu unterscheiden sind hierbei verschiedenfarbige Monochrome und Farbdisplays, wie sie von so genannten "E-Paper" und "E-Label" bekannt sind.

Vorteilhafterweise weist der Schalter zwei oder mehrere elektrochrome Materialien mit Elektroden auf. Hierdurch ist es möglich, eine Vielzahl von Farben bereitzustellen, wobei ein elektrochromes Material einer Farbe zugeordnet werden kann.

Weitere vorteilhafte Ausführungsformen sind als Schaltgerät, insbesondere Befehlsgerät, Meldegerät, Positionsschalter, Schütz, Leistungsschalter oder Kompaktabzweig, mit mindestens einem erfindungsgemäßen Schalter realisierbar. Im Grunde ist der erfindungsgemäße Schalter als ein elektromechanisches Schaltgerät ausführbar, dessen Funktion mit einem Zustand einer Anlage, Maschine oder einem ähnlichen technischen Gerät verknüpft werden kann. Demzufolge zählt auch ein Leuchtdrucktaster, der zu der Klasse der Befehlsgeräte gehört, eine Schaltfunktion hat und auf den Zustand einer anderen Maschine hinweist. Im Besonderen sind die Ausführungsformen der Erfindung nicht auf die Ausführungsbeispiele der folgenden Figurenbeschreibung begrenzt.

Weitere vorteilhafte Ausbildungen und bevorzugte Weiterbildungen der Erfindung sind der Figurenbeschreibung und/oder den Unteransprüchen zu entnehmen.

Im Folgenden wird die Erfindung anhand der in den Figuren dargestellten Ausführungsbeispiele näher beschrieben und erläutert.

### Es zeigen:

- FIG 1: ein elektrochromes Display mit Matrixansteuerung gemäß dem Stand der Technik,
- FIG 2: und 3 einen Druckschalter mit aktivierter bzw. deaktivierter flächigen Anzeige,
- FIG 4: und 5 einen Drehschalter mit aktivierter bzw. deaktivierter flächigen Anzeige,
- FIG 6: und 7 eine flächige Anzeige mit Pixeldarstellung zur Darstellung eines An- und Aus-Zustandes,
- FIG 8: und 9 eine flächige Anzeige zur symbolhaften Darstellung zweier Richtungszustände,
- FIG 10: eine flächige Anzeige zur Zeitindizierung.

FIG 1 zeigt ein elektrochromes Display mit Matrixansteuerung gemäß dem Stand der Technik, bei dem untere Elektroden 1.1, 1.2,1.3 und obere Elektroden 2.1,2.2,2.3 gitterartig angeordnet sind und an ein elektrochromes Material 3 angelagert sind. Auf diese Weise lassen sich Bereiche 4, die als Pixel ausgeführt sind, individuell durch einen Potentialunterschied der jeweils partizipierenden Elektroden ansteuern.

Die unteren Elektroden 1.1,1.2,1.3 liegen auf der Trägerschicht 7 auf. Eine Spannungsquelle 5 bringt die obere und untere Elektrode auf die notwendigen elektrischen Potentiale.

FIG 2 und 3 zeigen einen Druckschalter 11 mit aktivierter bzw. deaktivierter flächiger Anzeige 13. Der Druckschalter 11 weist eine Handhabe 12 mit einer Fläche 14 auf, die von der flächigen Anzeige 13 und der Oberfläche 10 umringt ist. Im nichtaktivierten Zustand stellt sich dem Betrachter die flächige Anzeige 13 in der gleichen Farbe dar, wie die Oberfläche 10. Dies wird beispielsweise dadurch erreicht, dass die Elektroden der flächigen Anzeige weitgehend transparent ausgestaltet sind, genauso wie die Schutzfläche und das verwendete elektrochrome Material im deaktivierten Zustand.

Wird das elektrochrome Material durch ein Anlegen einer Spannung aktiviert, so wird dieses undurchsichtig und absorbiert einen Teil des Lichtspektrums, wodurch ein Farbeindruck entsteht. So könnte beispielsweise eine violette Farbe der flächigen Anzeige 13 auf einen kritischen Zustand einer Maschine hinweisen und den Benutzer die Information übermitteln, dass eine Betätigung der Handhabe 12 möglicherweise zu einem größeren Schaden führen könnte. Optional könnte die Fläche 14 dafür verwendet werden.

Denkbar ist ebenfalls, ein Farbumschlag von einer wenig auffallenden Farbe, wie beispielsweise weiß, gelb oder grün, zu einer Signalfarbe wie orange, rot oder violett.

Vorteilhaft ist, dass sowohl die Elektroden, als auch das elektrochrome Material der flächigen Anzeige 13 ohne weiteres an die Gegebenheiten, d.h. an die notwendige Ringform angepasst werden können. Nun kann beispielsweise die Fläche 10 in ihrer Ausdehnung reduziert werden, da eine flächige Anzeige direkt um die Handhabe 12 für die Informationsübertragung völlig ausreichend ist. Der Schalter 11 ist demzufolge mit Rücksicht auf die Bediensicherheit in seinen Ausmaßen reduzierbar.

Dies ist insbesondere deshalb möglich, da ein großer Kontrast der flächigen Anzeige eine flächige Ausdehnung derselben wettmacht. Mit dieser Technik sind Farbkontraste im Verhältnis 1:25 möglich.

Vorteilhaft ist ebenso, dass die Informationsübertragung zum Benutzer auch nicht durch den Betrachtungswinkel gefährdet werden kann, der bei dieser Technik mit bis zu 165° immer noch gute Erkennbarkeit erlaubt. Im Vergleich dazu ist mit der heutigen Flachbildschirmtechnologie auf der Basis von Dünnfilmtransistoren (Thin Film Transsistors, TFT) nur mit Abstrichen ein Betrachtungswinkel von ca. 135° realisierbar.

Vorteilhafterweise stellt dies eine sehr ökonomische Lösung des Anzeigenproblems dar, zumal nur ein sehr geringer Energiebedarf notwendig ist, der typischerweise unter <500x10⁻⁶ W/cm² liegt. Der Spannungsbedarf ist ebenfalls gering und liegt typischerweise bei 1,2 V bis 3 V. Ökonomisch ist die Ausführungsform nicht nur wegen des geringen Stromverbrauchs, sondern auch aufgrund der wesentlich günstigeren Herstellungskosten gegenüber herkömmlichen LCD- oder LED-Anzeigen.

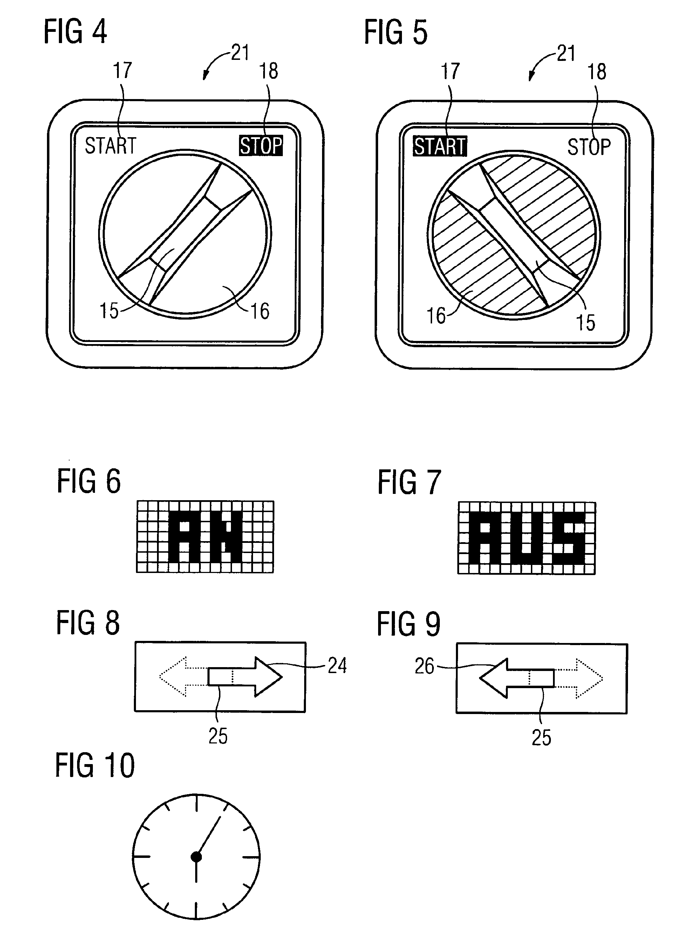

FIG 4 und 5 zeigen einen Drehschalter 21 mit deaktivierter bzw. aktivierter flächigen Anzeige 16. Die flächige Anzeige 16 erstreckt sich über einen Teil des Betätigers, zu dem auch die Handhabe 15 zählt. Somit wird eine Funktionskombination erreicht, die die Bauteileanzahl reduziert und die Zugehörigkeit des übermittelten Signals zum Betätiger bzw. der Handhabe 15 anzeigt.

Der Drehschalter 21 könnte beispielsweise zum Ingangsetzen einer technischen Anlage verwendet werden, wobei gleichzeitig eine Information bezüglich des Zustandes der Anlage an den Benutzer übermittelt wird.

Der Drehschalter 21 weist flächige Anzeigen 17 und 18 auf, die jeweils die Beschriftung "Stop" und "Start" bilden. Beide Anzeigen zeigen das jeweilige Wort in normaler Schreibweise bzw. farblich invertiert an. Da die Invertierung eher ins Auge fällt als die nichtinvertierte Schreibweise, erkennt der Benutzer daran, ob die technische Anlage derzeit bestromt wird oder nicht. Die verwendeten Elektroden innerhalb der flächigen Anzeigen 17,18 bilden dabei die dargestellten Buchstaben bzw. deren invertierte Darstellung, wobei die Elektroden, die die invertierte Darstellung bilden, separat von den Elektroden, die die Buchstaben bilden, elektrisch angesteuert sind. Ggf ist jeweils nur eine Elektrode notwendig.

Da die tatsächliche Bestromung der technischen Anlage sehr oft nicht mit der eigentlichen Betriebsaufnahme zusammenfällt, kann die flächige Anzeige 16 dafür vorgesehen sein, die tatsächliche Betriebsaufnahme zu indizieren. Dies bedeutet, dass der Farbumschlag der flächigen Anzeige 16 erst mit dem Anlaufen der technischen Anlage eintritt. Somit ist es dem Benutzer möglich, die Stromversorgung gefahrlos wieder auszuschalten, wenn sich die technische Anlage nicht in Betrieb setzen lässt.

Als vorteilhaft erweist sich dabei die Kombination der Handhabe 15 mit der flächigen Anzeige 16, wodurch aufgrund der räumlichen Ausdehnung der Handhabe 15 eine gute Sichtbarkeit der flächigen Anzeige im Raum gewährleistet ist. Dies wird weiterhin dadurch unterstützt, dass die flächige Anzeige 16 einen großen Anteil des Drehschalters 21 einnimmt. Im Vergleich zu mechanischen Schaltstellungsanzeigen ist aufgrund des hohen Kontrastes die Sichtbarkeit auch bei schlechteren Sichtverhältnissen leicht aufrechtzuerhalten. Der großflächige Farbumschlag entfaltet eine sehr gute Signalwirkung, die durch ein langsames oder schnelles Blinken, das durch eine alternierende Spannung verursacht wird, unterstützt wird. Das Blinken beruht dabei nicht auf einem Leuchteffekt, sondern lediglich in der Farb- und/oder Kontraständerung.

Vorteilhafterweise lässt sich ein Leuchtelement mit dem Schalter und insbesondere mit der flächigen Anzeige kombinieren. Wird ein Leuchtelement, wie beispielsweise eine LED oder ein TFT-Display, unter der flächigen Anzeige angebracht, nimmt das monochrome Material ebenso auf das Leuchtverhalten der flächigen Anzeige Einfluss. Strukturen, Symbole, Buchstaben etc, die von der flächigen Anzeige gebildet werden, können von hinten beleuchtet werden. Hierbei ist es notwendig, die oberen und unteren Elektroden transparent auszuführen, sodass das Licht des Leuchtelementes nach Außen dringen kann. Die Abschwächung des Lichtes ist dabei durch eine kontrollierte Absorption möglich.

FIG 6 und 7 zeigen eine flächige Anzeige mit Pixeldarstellung zur Darstellung eines An- und Aus-Zustandes.

Vorteilhafterweise kann die flächige Anzeige des Schalters ganz wie ein so genanntes Dot-Matrix-Display betrieben werden. Ähnlich wie bei bekannten LCDs kann bei diesen flächigen Anzeigen mittels elektronischer Steuerung eine große Varianz von Symbolen oder Schrift im beliebigen Wechsel erzeugt werden. Hierbei ist insbesondere auf Blinksymbole und Laufschrift hinzuweisen.

Aufgrund der pixelartigen Ansteuerung des elektrochromen Materials kann von einer bildschirmähnlichen Anzeige gesprochen werden. Dadurch ist es möglich, an der gleichen Stelle unterschiedliche Symbole, Buchstaben oder ähnliches anzeigen zu können, wie es für die Worte "An" und "Aus" gezeigt ist.

FIG 8 und 9 zeigen eine flächige Anzeige zur symbolhaften Darstellung zweier Richtungszustände.

Eine derartige flächige Anzeige, wie auch die der anderen Ausführungsbeispiele, eignet sich zum Einsatz in Kombination mit Befehls- und Meldegeräten. Nicht nur die Änderung einer Beschriftung oder der Farbe der flächigen Anzeige kann geändert werden, sondern auch eine symbolhafte Darstellung kann sich als vorteilhaft erweisen.

Die Symbole der FIG 8 und 9 bestehen aus einem links- und einem rechtsweisenden Pfeil. Der rechtsweisende Pfeil besteht aus unabhängigen Anzeigeelementen 25 und zustandsabhängigen Anzeigeelementen 24. Nur für die Anzeigeelemente 24 werden Elektroden benötigt, die mit ihrer eigenen Form die Form der Pfeilelemente komplettieren. Entsprechend verhält es sich mit den zustandsabhängigen Elementen 26 der FIG 9. Vorteilhaft ist, dass bei einem Zustandsübergang die Elemente 25 nicht angesteuert werden müssen bzw. gar keine Elektroden beinhalten müssen, um unabhängige Anzeigeelemente in der flächigen Anzeige darzustellen. Durch die Teilintegration der beiden Symbole ineinander entsteht weiteres Einsparungspotential hinsichtlich der verbrauchten Energie und des Herstellungsprozesses.

FIG 10 zeigt eine flächige Anzeige zur Zeitindizierung. Die flächige Anzeige ist weiterhin geeignet zum Anzeigen von Betriebsparametern, wie z.B. Temperaturen, Betriebsströmen, Schaltstellungen, Warnungen, erkannten Störfällen, nahes Lebensdauerende, etc..

Die dargestellte flächige Anzeige erinnert an eine Uhr. Beispielsweise könnte dem Benutzer vermittelt werden, wie lange nach dem Einschalten die Maschine oder technische Anlage noch in einem sicheren Zustand verbleibt. Weiterhin kann eine derartige flächige Anzeige in Kombination mit einem Ein-AusSchalter benutzt werden, wobei lediglich die tatsächliche Betriebszeit in Form von Minuten oder Stunden angezeigt wird, indem die Uhr nur während des tatsächlichen Betriebes läuft. Ein kurzes Drücken (beispielsweise auf die flächige Anzeige selbst) aktiviert bzw. deaktiviert die zu steuernde Maschine bzw. Anlage.

Zusammenfassend betrifft die Erfindung einen Schalter, insbesondere ein Schaltgerät oder Befehlsgerät, mit einer flächigen Anzeige, wobei die flächige Anzeige zur visuellen Anzeige wenigstens einer Information vorgesehen ist, die einen Bezug zu einem gegenwärtigen oder einem zukünftigen Zustand des Schalters oder einer dem Schalter zugeordneten Anlage oder Maschine aufweist. Eine räumlich effektivere Anordnung der Schalterbauteile sowie ein reduzierter Energieverbrauch soll durch eine flächige Anzeige des Schalters bewerkstelligt werden, die zumindest teilweise ein elektrochromes Material und Elektroden aufweist. Die Elektroden sind dazu vorgesehen, bestimmte Bereiche des elektrochromen Materials mit einer elektrischen Spannung zu belegen, damit einen Farbumschlag zu provozieren und mittels einer intelligenten Ansteuerung eine oder mehrere Informationen an den Benutzer weiterzugeben.

## Patentansprüche

1. Schalter (11,21) mit einer flächigen Anzeige (13,14,16, 17,18), wobei die flächige Anzeige (13,14,16,17,18) zur visuellen Anzeige wenigstens einer Information vorgesehen ist, die einen Bezug zu einem gegenwärtigen und/oder zukünftigen Zustand aufweist, **dadurch gekennzeichnet, dass** die flächige Anzeige (13,14,16,17,18) zumindest teilweise ein elektrochromes Material (3) und Elektroden (1,2) aufweist, wobei die Elektroden (1,2) zum Anlegen einer elektrischen Spannung an zumindest einen Bereich des elektrochromen Materials (3) vorgesehen sind.

2. Schalter (11,21) nach Anspruch 1, wobei die flächige Anzeige (13,14,16,17,18) eine Schutzschicht (6), insbesondere eine Schutzfolie zum Schutz der Elektroden (1,2) aufweist.

3. Schalter (11,21) nach einem der vorhergehenden Ansprüche,
wobei die flächige Anzeige (13,14,16,17,18) mindestens eine transparente Elektrode (2) aufweist.

4. Schalter (11,21) nach einem der vorhergehenden Ansprüche,
wobei die flächige Anzeige (13,14,16,17,18) eine Mehrzahl von Elektroden (1,2) und Bereiche (4) des elektrochromen Materials (3) aufweist und die Bereiche (4) pixelähnlich ausgeführt sind.

5. Schalter (11,21) nach einem der vorhergehenden Ansprüche,
wobei die flächige Anzeige (13,14,16,17,18) ganz oder teilweise zur Betätigung des Schalters (11,21) vorgesehen ist.

6. Schalter (11,21) nach einem der vorhergehenden Ansprüche,
wobei der Schalter (11,21) eine Handhabe (15) zur Schaltzustandsänderung des Schalters (21) aufweist und die flächige Anzeige (16) an der Handhabe (15) angeformt ist.

7. Schalter (11,21) nach einem der vorhergehenden Ansprüche,
wobei die Information mindestens ein Symbol, eine Zahl, einen Buchstaben, ein Sonderzeichen, ein Flussdiagramm und/oder eine Kombination derselben beinhaltet.

8. Schalter (11,21) nach einem der vorhergehenden Ansprüche,
wobei die Information eine Zeitabhängigkeit, insbesondere als Laufschrift, blinkende Information oder einer bildschirmartigen Darstellung, aufweist.

9. Schalter (11,21) nach einem der vorhergehenden Ansprüche, wobei das elektrochrome Material (3) zur Generierung einer oder mehrerer Farben geeignet ist.

10. Schalter (11,21) nach einem der vorhergehenden Ansprüche, wobei der Schalter (11,21) zwei oder mehrere elektrochrome Materialien (3) mit Elektroden(1,2) aufweist, wobei die Elektroden (1,2) zum Anlegen einer elektrischen Spannung an zumindest einem Bereich (4) der elektrochromen Materialien vorgesehen sind.

11. Schalter (11,21) nach einem der vorhergehenden Ansprüche, wobei der zukünftige und/oder gegenwärtige Zustand der Schaltzustand des Schalters (11,21) oder ein Zustand einer dem Schalter (11,21) zugeordneten Maschine oder Anlage ist.

12. Schalter (11,21) nach einem der vorhergehenden Ansprüche,
wobei die Information eine physikalische Größe, insbesondere Strom, Spannung, Temperatur, und/oder ein Signal, insbesondere ein Auslösesignal, beinhaltet.

13. Schalter (11,21) nach einem der vorhergehenden Ansprüche,
wobei zumindest ein Teil der Elektroden, insbesondere unter dem elektrochromen Material (3) vorgesehene Elektroden, transparent sind.

14. Schalter (11,21) nach Anspruch 13, wobei unter den transparenten Elektroden ein Leuchtelement angeordnet ist.

15. Schaltgerät, insbesondere Befehlsgerät, Meldegerät, Positionsschalter, Schütz, Leistungsschalter oder Kompaktabzweig, mit mindestens einem Schalter (11,21) nach einem der Ansprüche 1 bis 14.

16. Überlastrelais mit mindestens einem Schalter (11,21) nach einem der Ansprüche 1 bis 14.
